# EUROPÄISCHE PATENTSCHRIFT

(11) **EP 1 206 373 B1**
(45) Veröffentlichungstag und Bekanntmachung des Hinweises auf die Patenterteilung: **01.10.2003**
(21) Anmeldenummer: 00951398.7
(22) Anmeldetag: 18.07.2000
(51) Int. Cl.: B60R 13/08, B32B 15/08, G10K 11/168

(54) **SCHALLDÄMPFENDE UND SCHALLDÄMMENDE BESCHICHTUNG EINES ZU SCHWINGUNGEN NEIGENDEN BAUTEILS**
SOUND-ABSORBING AND SOUND-DEADENING COATING FOR A STRUCTURAL PART THAT VIBRATES
REVETEMENT AMORTISSEUR DE BRUIT ET INSONORISANT D'UN COMPOSANT SOUMIS A DES VIBRATIONS

(30) Priorität: 07.08.1999 DE 19937462
(43) Veröffentlichungstag der Anmeldung: 22.05.2002
(73) Patentinhaber: Volkswagen Aktiengesellschaft, 38436 Wolfsburg (DE)
(72) Erfinder: MÜLLER, Reinhard, D-38518 Gifhorn (DE); HEESCHER, Alexander, D-38477 Jembke (DE)
(86) Internationale Anmeldenummer: EP0006855
(87) Internationale Veröffentlichungsnummer: WO01010682

(56) Entgegenhaltungen:
- EP-A- 0 253 376
- EP-A- 0 384 420
- EP-B- 0 195 923
- WO-A-95/27975
- DE-A- 3 709 080
- DE-C- 3 705 754
- DE-U- 9 204 402

## Beschreibung

Die Erfindung betrifft eine Beschichtung gemäß dem Oberbegriff des Patentanspruchs 1.

Insbesondere ist dabei an die Schallisolierung eines Karosserieblechs eines Kraftfahrzeugs gedacht, beispielsweise eines Bodenblechs oder einer Trennwand zwischen Motor- und Fahrgastraum.

Zur Lösung des zunehmend in den Vordergrund tretenden Problems der Schalldämpfung und Schalldämmung bei zu Schwingungen neigenden Bauteilen gibt es insbesondere in der Kraftfahrzeugtechnik eine Vielzahl von Lösungen. So beschreibt die EP 0 195 923 B1 eine adhäsive Beschichtung eines Karosserieteils zwecks Erzielung einer Klebhaftung einer federnden Schaumstoffzwischenschicht an dem Karosserieteil, die ihrerseits eine Schwerschicht trägt. Dabei kann die Schwerschicht durch eine Wandverkleidung gebildet sein; zum Stand der Technik gehört auch die Heranziehung eines Bodenbelags zur Bildung der Schwerschicht. Schwingungstechnisch gesprochen bildet diese Beschichtung zusammen mit dem Schwingungserzeuger, also dem Karosserieblech, ein Feder-Masse-System, das luftschalldämmend, luftschallabsorbierend und körperschalldämpfend ausgelegt sein kann. Die adhäsive Verbindung zwischen der Zwischenschicht einerseits und dem Karosserieteil andererseits soll zusammen mit der Schwerschicht zur Bildung eines Systems nach Art eines Sandwich-Systems führen, in dem die biegesteife Abdeckung eine zusätzliche Komponente zur Körperschalldämpfung liefert.

Die DE 25 26 325 C2 beschreibt eine mehrschichtige schall- und schwingungsdämpfende Verkleidung für Karosserieteile mit einer Zwischenschicht (zwischen dem Karosserieteil und dem schweren Belag) aus offenzelligem Schaumstoff mit einem Anteil an klebriger Substanz (genannt wird Bitumen). Je nach Art der klebrigen (viskosen) Masse werden die Zellen der Zwischenschicht mehr oder minder stark angefüllt, damit das federnde Gerüst der Zwischenschicht so gedämpft wird, daß Schwingungen nicht vom Karosserieblech auf die schwere Masse übertragen werden.

Die DE 92 04 402.6 U1 befaßt sich demgegenüber mit einem Kraftfahrzeug-Innenverkleidungsteil, das zur Schallisolation über eine viskoelastische Schicht mit einer Aluminiumfolie belegt ist. Während diese Maßnahme zur Körperschalldämpfung (Entdröhnung) dient, ist zur Luftschallabsorption auf der Aluminiumfolie ein Baumwollvlies vorgesehen. Die DE 89 12 240.2 U1 betrifft ein Hitzeschild aus mehreren, durch Zwischenschichten getrennten Aluminiumfolien, d.h. letztlich ein Sandwich. Außer der Wärmedämmung wird als Ziel beiläufig auch eine Schalldämmung erwähnt. Die Ausführungsbeispiele enthalten jeweils nur eine einzelne Aluminiumfolie, die über eine Zwischenschicht aus voluminösem Vliesstoff aus Reißbaumwolle und Phenolharz auf dem zu schützenden Teil angeordnet ist. Über ein Feder-Masse-System ist in dieser Schrift nichts gesagt.

Der Erfindung liegt die Aufgabe zugrunde, eine gattungsgemäße Beschichtung, wie sie aus der eingangs diskutierten EP 0 195 923 B1 bekannt ist, hinsichtlich der über einen breiten Temperatur- und Frequenzbereich wirksamen Dämpfung und Entdröhnung zu verbessern und die Möglichkeit einer getrennten Abstimmung zu schaffen.

Die erfindungsgemäße Lösung dieser Aufgabe besteht in den kennzeichnenden Merkmalen des Hauptanspruchs, eine vorteilhafte Ausbildung der Erfindung beschreibt der Unteranspruch.

Wesentlich für die Erfindung ist also die Kombination eines Metallsandwiches und einer der Zwischenschicht aus einem adhäsiven Schaumstoff zugekehrten, steifen Deckschicht. Während der Sandwichaufbau für eine gegenüber dem Stand der Technik deutlich höhere Dämpfung in einem weiten Temperaturbereich sorgt, bewirkt die Kombination von Sandwich und adhäsivem Schaum, die in allen Richtungen kraftübertragend, also kraftschlüssig, verbunden sind, eine zusätzliche Dämpfung verbleibender Biegeschwingungen. Die Erfindung trägt damit auch dem Einsatz modemer Brennkraftmaschinen mit verstärkten Geräuschanteilen im hochfrequenten Bereich in Kraftfahrzeugen Rechnung. Die bei der Erfindung erzielte zusätzliche Schubbelastung im Feder-Masse-System, das als mechanischer Tiefpaß dient, und die Verwendung eines Sandwichs schaffen die vorteilhafte Möglichkeit, gleichsam beide Systeme kombiniert abzustimmen.

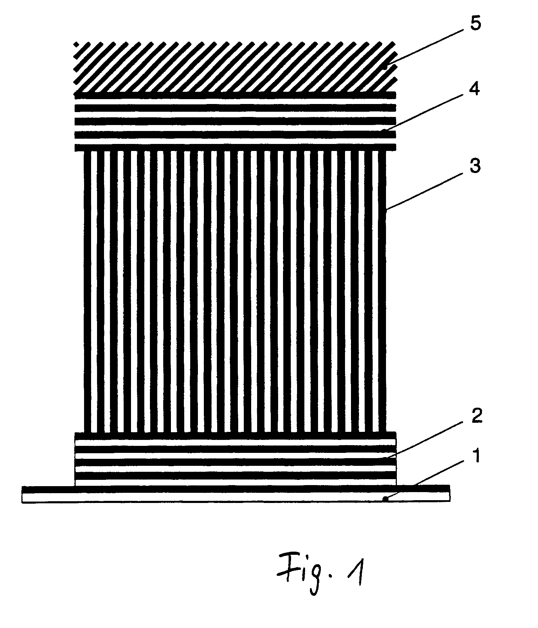

Ein Ausführungsbeispiel der Erfindung wird im folgenden anhand der Zeichnung erläutert, die einen Querschnitt durch die Beschichtung wiedergibt.

Bei 1 ist ein zu Schwingungen neigendes Karosserieblech angedeutet. Es trägt den Aluminium-Sandwich 2 mit einer Vielzahl von Aluminiumschichten, der der Entdröhnung dient. Auf seiner dem Karosserieblech 1 abgewendeten Seite endet der Sandwich 2 mit einer Aluminiumschicht. Diese trägt ihrerseits die Zwischenschicht 3 aus einem adhäsiven Schaumstoff, so daß zwischen Sandwich 2 und Zwischenschicht 3 eine Klebverbindung vorliegt. Die Zwischenschicht 3 wiederum trägt die Schwerschicht 4 und den Bodenbelag 5, wobei die Schwerschicht 4 einen Bestandteil des Bodenbelags 5 bilden kann. Damit liegen bei der Erfindung gleichsam zwei akustische Systeme vor: Zum einen bildet das Karosserieblech 1 mit dem Metallsandwich 2 sowie mit der Zwischenschicht 3 und der Schwerschicht 4 ein Feder-Masse-System, das eine wirksame Schalldämmung bewirkt. Diese Schalldämmung kann durch entsprechende Wahl von Menge und Material des Klebstoffs und auch des Schaumstoffs eingestellt werden. Das zweite akustische System wird zumindest im wesentlichen durch den Metallsandwich 2 gebildet, der eine wirksame Entdröhnung sicherstellt. Diese Entdröhnung kann ihrerseits durch entsprechende Ausbildung des Sandwiches 2 eingestellt werden.

Die Kombination von Aluminiumsandwich 2 und adhäsiver Schaumstoff-Zwischenschicht 3 schließlich bewirkt eine zusätzliche Dämpfung von Biegewellen.

Statt einer Deckschicht aus Aluminium kann auch eine solche aus anderen haftfähigen, zug- und schubsteifen Materialien Einsatz finden, beispielsweise lackierte Pappe oder wärmehärtendes Epoxydharz.

Mit der Erfindung ist demgemäß eine platzsparende schalldämpfende und schalldämmende Beschichtung eines zu Schwingungen neigenden Bauteils mit hoher, einstellbarer Wirksamkeit geschaffen.

## Patentansprüche

1. Schalldämpfende und schalldämmende Beschichtung eines zu Schwingungen neigenden Bauteils (1), insbesondere eines Karosserieblechs eines Kraftfahrzeugs, mit einer durch Verklebung Kraftschlüssig in Halteverbindung mit dem Bauteil (1) stehenden adhäsiven Schaumstoff-Zwischenschicht (3), einer diese abdeckenden Schwerschicht (4) zur Bildung eines Feder-Masse-Systems und einer Deckschicht zwischen dem Bauteil (1) und der Schaumstoff-Zwischenschicht (3), wobei die Deckschicht, zug- und schubsteif und Bestandteil eines Sandwich (2) ist, **dadurch gekennzeichnet, daß** der Sandwich ein Metallsandwich (2) ist und daß die Deckschicht der Zwischenschicht (3) zugekehrt ist.

2. Beschichtung nach Anspruch 1, **gekennzeichnet dadurch, daß** der Metall-Sandwich (2) ein Aluminiumsandwich und die Deckschicht aus Aluminium ist.

3. Beschichtung nach Anspruch 1, **gekennzeichnet dadurch, daß** die Deckschicht eine Schicht aus einem wärmehärtendem Epoxydharz ist.

## Claims

1. Sound-absorbing and sound-deadening coating for a structural part (1) which has a tendency to vibrate, in particular a motor vehicle body sheet, having an adhesive intermediate layer (3) of foam joined to the structural part (1) non-positively by means of bonding, a heavy layer (4), which covers the said intermediate layer, in order to form a spring-mass system, and a covering layer between the component (1) and the intermediate layer (3) of foam, with the covering layer being resistant to tension and compression and being part of a sandwich (2), **characterized in that** the sandwich is a metal sandwich (2) and **in that** the covering layer faces the intermediate layer (3).

2. Coating according to Claim 1, **characterized in that** the metal sandwich (2) is an aluminium sandwich and the covering layer consists of aluminium.

3. Coating according to Claim 1, **characterized in that** the covering layer is a layer consisting of heat-curing epoxy resin.

## Revendications

1. Revêtement amortisseur de bruit et insonorisant d'un composant (1) sujet à des vibrations, en particulier d'une tôle de carrosserie d'un véhicule automobile, comprenant une couche intermédiaire en mousse (3) adhésive, en liaison de fixation par adhésion avec le composant (1) par le biais d'un collage, une couche lourde (4) recouvrant celle-ci pour la formation d'un système de masse à ressort et une couche de recouvrement entre le composant (1) et la couche intermédiaire en mousse (3), la couche de recouvrement étant résistante à la traction et à la poussée et faisant partie d'un sandwich (2), **caractérisé en ce que** le sandwich est un sandwich métallique (2) et **en ce que** la couche de recouvrement est tournée vers la couche intermédiaire (3).

2. Revêtement selon la revendication 1, **caractérisé en ce que** le sandwich métallique (2) est un sandwich en aluminium et la couche de recouvrement est en aluminium.

3. Revêtement selon la revendication 1, **caractérisé en ce que** la couche de recouvrement est une couche en résine époxy thermodurcissable.
